# EUROPÄISCHE PATENTSCHRIFT

(11) **EP 1 781 966 B1**
(45) Veröffentlichungstag und Bekanntmachung des Hinweises auf die Patenterteilung: **16.01.2008**
(21) Anmeldenummer: 05774319.7
(22) Anmeldetag: 08.08.2005
(51) Int. Cl.: F16H 57/02, B28C 5/42

(54) **ANTRIEB FÜR EINE MISCHTROMMEL**
DRIVE FOR A MIXING DRUM
ENTRAINEMENT POUR TAMBOUR MELANGEUR

(30) Priorität: 07.08.2004 DE 102004038504; 07.08.2004 DE 102004038506; 01.12.2004 DE 102004057849; 17.03.2005 DE 102005012823
(43) Veröffentlichungstag der Anmeldung: 09.05.2007
(73) Patentinhaber: ZF FRIEDRICHSHAFEN AG, 88038 Friedrichshafen (DE)
(72) Erfinder: HEILIG, Eduard, 88048 Friedrichshafen (DE); GEIER, Andreas, 94118 Jandelsbrunn (DE)
(86) Internationale Anmeldenummer: PCT/EP2005/008583
(87) Internationale Veröffentlichungsnummer: WO 2006/015834

(56) Entgegenhaltungen:
- EP-A- 1 186 390
- DE-A1- 2 139 492
- DE-A1- 2 753 246
- DE-A1- 3 214 405
- FR-A- 1 553 902
- FR-A- 2 181 171
- GB-A- 2 044 884
- US-A- 3 912 239
- PATENT ABSTRACTS OF JAPAN Bd. 011, Nr. 318 (M-632), 16. Oktober 1987 (1987-10-16) -& JP 62 101944 A (FUJI TOOL & DIE CO LTD), 12. Mai 1987 (1987-05-12)

## Beschreibung

Die Erfindung bezieht sich auf einen Antrieb für eine Mischtrommel, insbesondere eines Transport-Betonmischers, nach der im Oberbegriff von Anspruch 1 näher definierten Art.

Antriebe für Mischtrommeln, insbesondere für einen Transport-Betonmischer, haben die Aufgabe, die Trommel in Drehrichtung "Einziehen" zu drehen, um beispielsweise den Beton in die Trommel zu befördern, die Trommel in Drehrichtung "Entleeren" zu drehen, um beispielsweise den Beton aus der Trommel zu befördern und das Gewicht der Trommel aufzunehmen und über einen Lagerbock an den Rahmen des Fahrzeugs weiterzuleiten.

Eine weitere Aufgabe ist es, bei der Fahrt des Fahrzeugs in unebenem Gelände Verformungen des Rahmens auszugleichen, wodurch ein Fehlwinkel der Trommel zum restlichen Fahrzeug auftritt. Da zwischen der Trommel und dem Fahrerhaus nur ein begrenzter Raum zu Verfügung steht, ist das Getriebe, insbesondere in axialer Richtung, kompakt auszuführen.

Die EP 11 86 390 B1 offenbart ein Getriebe für den Antrieb einer Mischtrommel, bei wechem ein langsamlaufender, hydrostatisch außen abgestützter Hydraulikmotor ein inneres Zentralrad einer Planetenstufe antreibt, dessen äußeres Zentralrad den Abtrieb bildet und einen Abtriebsflansch antreibt, welcher mit der Trommel verbunden ist.

Der vorliegenden Erfindung liegt die Aufgabe zugrunde, einen Antrieb für eine Mischtrommel zu schaffen, bei welcher verschiedene Arten von Antriebsmotoren verwendet werden können.

Erfindungsgemäß weist das Getriebe ein Gehäuseteil auf, welches sich durch zwei Anflanschflächen auszeichnet, welche auf der der Mischtrommel abgewandten Seite angeordnet sind, wobei eine erste Anflanschfläche zum Anflanschen eines weiteren Gehäuseteils, welches ein Untersetzungsgetriebe umgibt, ausgebildet ist, und die zweite Anflanschfläche zum direkten Anflanschen eines Hydraulikmotors ausgebildet ist. Vorzugsweise ist der direkt angeflanschte Hydraulikmotor an der zweiten Anflanschfläche ein außen abgestützter, langsamlaufender Hydraulikmotor, es besteht jedoch auch die Möglichkeit, hier einen Hydraulikmotor in Kurbelwellenausführung zu verwenden.

In einer weiteren Ausgestaltungsform ist die zweite Anflanschfläche so ausgebildet, dass ein äußeres Zentralrad der ersten Planetengetriebestufe, welche in dem weiteren Gehäuseteil angeordnet ist, direkt an der zweiten Anflanschfläche anliegt und an dieser befestigt ist. Das Gehäuseteil mit den zwei Anflanschflächen kann so ausgebildet sein, dass es einerseits flanschartig ausgebildet ist, um eine Lagerung aufzunehmen, über welche die Mischtrommel gelagert ist, und andererseits kann dieses Gehäuseteil mit einem Sockel verbunden sein, über welchen der Antrieb mit einem Lagerbock verbunden ist.

Indem das Gehäuseteil zwei Anflanschflächen aufweist, ist es möglich, entweder den Antrieb mit einer Untersetzungsgetriebestufe und einem direkt angebauten, langsamlaufenden, ein hohes Drehmoment abgebenden Hydraulikmotor auszubilden, oder den Antrieb mit zwei Untersetzungsgetriebestufen auszubilden, wobei diesen Antrieb ein Antriebsmotor, vorzugsweise ein hydraulischer Antriebsmotor, antreibt, welcher ein schnelllaufender Axialkolbenmotor ist. Somit besteht die Möglichkeit, je nach Anwendungsfall, den geeigneten Antriebsmotor zu verwenden, ohne das Getriebe vollständig austauschen zu müssen. Es besteht auch die Möglichkeit, den Antriebsmotor zu wechseln, ohne die Trommel abstützen zu müssen, wobei die Verbindung der Trommel über die Lagerung und das Gehäuseteil zum Lagerbock beim Austausch des Hydraulikmotors und der ersten Planetenstufe erhalten bleibt.

Weitere Merkmale sind der Figuren-Beschreibung zu entnehmen.
Es zeigen:
- Fig. 1: einen Antrieb für eine Mischtrommel mit einem außen abgestützten, langsamlaufenden Hydraulikmotor, welcher an die zweite Anflanschfläche angeflanscht ist;
- Fig. 2: einen Antrieb für eine Mischtrommel mit einem schnelllaufenden Hydraulikmotor, welcher die Trommel über zwei Planetengetriebe antreibt, wobei das äußere Zentralrad des ersten Planetengetriebes an der zweiten Anflanschfläche angeflanscht ist;
- Fig. 3: einen Antrieb für eine Mischtrommel mit einem schnelllaufenden Hydraulikmotor, bei welchem das äußere Zentralrad des ersten Planetengetriebes in einem Gehäuse befestigt ist, welches an der ersten Anflanschfläche anliegt und
- Fig. 4: einen Antrieb für eine Mischtrommel mit einem schnelllaufenden Hydromotor, bei welchem im weiteren Gehäuseteil zwei Planetenstufen angeordnet sind.

### Fig. 1:

Das Gehäuse 1 weist eine erste Anflanschfläche 2 und eine zweite Anflanschfläche 3 auf. Ein außen abgestützter, langsamlaufender Hydraulikmotor weist eine äußere Kurvenscheibe 4 auf, welche an der zweiten Anflanschfläche 3 anliegt und im Gehäuse 1 über Verbindungselemente 5 ortsfest gehalten wird. Die Axialkraft dieses Hydraulikmotors wird über ein Lager 6 in das Gehäuse 1 eingeleitet. Das Gehäuse 1 weist eine Trägerplatte 7 auf, an welcher beispielsweise ein Wassertank befestigt sein kann. Das Gehäuse 1 ist vorzugsweise einstückig mit einem Sockel 8 ausgebildet, welcher über ein elastisches Element 9 mit einem nicht gezeigten Lagerbock des Fahrzeugs verbunden ist, welcher mit einem Rahmenteil des Fahrzeugs befestigt ist. Das Gehäuse 1 weist einen flanschartigen Hals 10 auf, auf welchem Lager 11 befestigt sind, welche insbesondere als Kegelrollenlager ausgebildet sind, deren Innenringe ortsfest auf dem Hals 10 angeordnet sind. Ein Bauteil 12 ist mit den Außenringen der Lager 11 verbunden und überträgt die Gewichtskraft der nicht gezeigten Trommel auf die Lagerung 11. Zusammen mit einem äußeren Zen-tralrad 13 bildet das Bauteil 12 einen Abtriebsflansch 14, welcher mit der nicht gezeigten Trommel verbunden ist. Um einen flüssigkeitsdichten Abschluß zu erhalten, weist der Antrieb eine Abdeckung 15, welche den Antrieb für die Mischtrommel flüssigkeitsdicht verschließt. Der Hydraulikmotor 16 treibt ein inneres Zentralrad 17 an, welches über Planeten 18 das äußere Zentralrad 13 antreibt. Der Planetenträger 19 liegt an der Stirnfläche des Halses 10 an und ist drehfest mit diesem verbunden. Gleichzeitig begrenzt der Planetenträger 19 den axialen Bauraum für die Lagerung 11.

In einer weiteren Ausgestaltungsform sind zwischen dem Planetengetriebe und dem Hydraulikmotor 16 keine Dichtelemente vorhanden, wodurch das Schmiermittel des Hydraulikmotors 16 auch die Lagerung 11 und das Planetengetriebe schmiert und kühlt.

In einer weiteren Ausgestaltungsform der Erfindung ist zwischen dem inneren Zentralrad 17 und dem Hals 10 ein Dichtelement angeordnet, wodurch das Planetengetriebe mit einem Schmiermittel geschmiert und gekühlt wird, und der Hydraulikmotor 16 mit einem anderen Schmiermittel gekühlt und geschmiert wird, wobei die beiden Schmiermittel sich nicht vermischen.
Es besteht jedoch auch die Möglichkeit, bei dieser Ausführungsform im Hydraulikmotor ein Dichtelement anzuordnen und dennoch den Hydraulikmotor und das mechanische Untersetzungsgetriebe über eine externe Leitung zu verbinden, wodurch sich das Schmiermittel des Hydraulikmotors und des mechanischen Getriebes vermischen kann.

In einer weiteren Ausgestaltungsform kann seitlich am Gehäuse 1 ein Kühler angeordnet sein, welcher das Schmiermittel des Hydraulikmotors kühlt.

### Fig. 2:

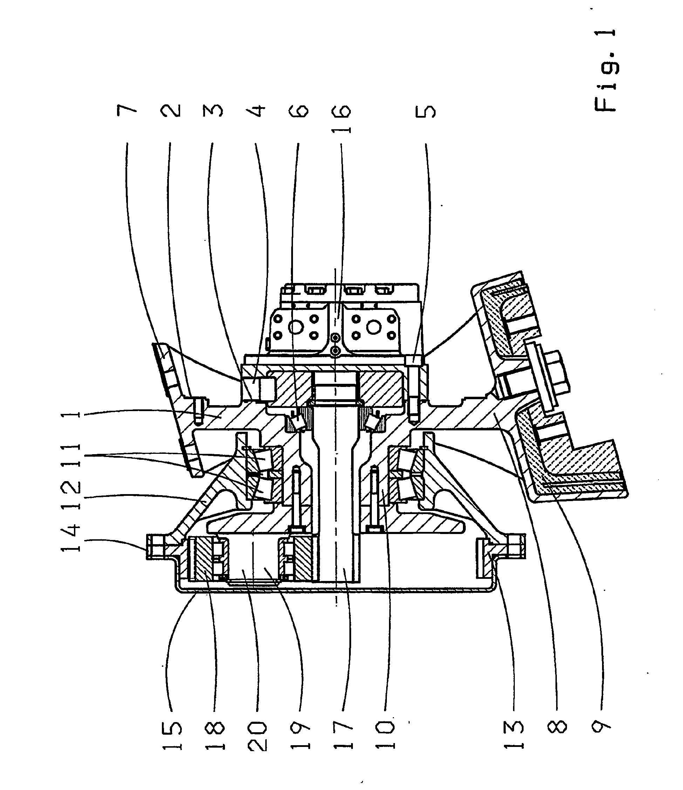

Der Aufbau des Gehäuses 1 der Lagerung 11 des Bauteils 12 und des Planetengetriebes 20 unterscheidet sich nicht vom Aufbau des Antriebs in Fig. 1.

An der ersten Anflanschfläche 2 liegt ein Gehäuseteil 21 an und ist über Verbindungselemente 22 mit dem Gehäuse 1 verbunden. Das innere Zentralrad 17 ist mit einem Planetenträger 23 drehfest verbunden, welcher Planeten 24 lagert, welches sich einerseits an einem äußeren Zentralrad 25 abstützt und andererseits über ein inneres Zentralrad 26 angetrieben wird. Das innere Zentralrad 26 wird von einem schnelllaufenden Axial-Hydraulikmotor 27 angetrieben und ist mit der Abtriebswelle des Hydraulikmotors 27 einstückig ausgebildet. Das äußere Zentralrad 25 liegt an der zweiten Anflanschfläche 3 an und ist über Verbindungselemente 28 im Gehäuse 1 gehalten. Somit ist es möglich, einen schnelllaufenden Hydraulikmotor 27 zu verwenden, ohne das Gehäuse 1 und das Planetengetriebe 20 zu verändern. Auch bei dieser Ausgestaltungsform besteht die Möglichkeit, Dichtelemente zwischen dem inneren Zentralrad 26 und dem Gehäuse des Hydraulikmotors 27 anzubringen, um getrennte Ölreservoirs zu schaffen. Es besteht auch die Möglichkeit, den Antrieb ohne diese Dichtelemente auszuführen, um den Antrieb mit einem gemeinsamen Schmiermittel betreiben zu können.

### Fig. 3:

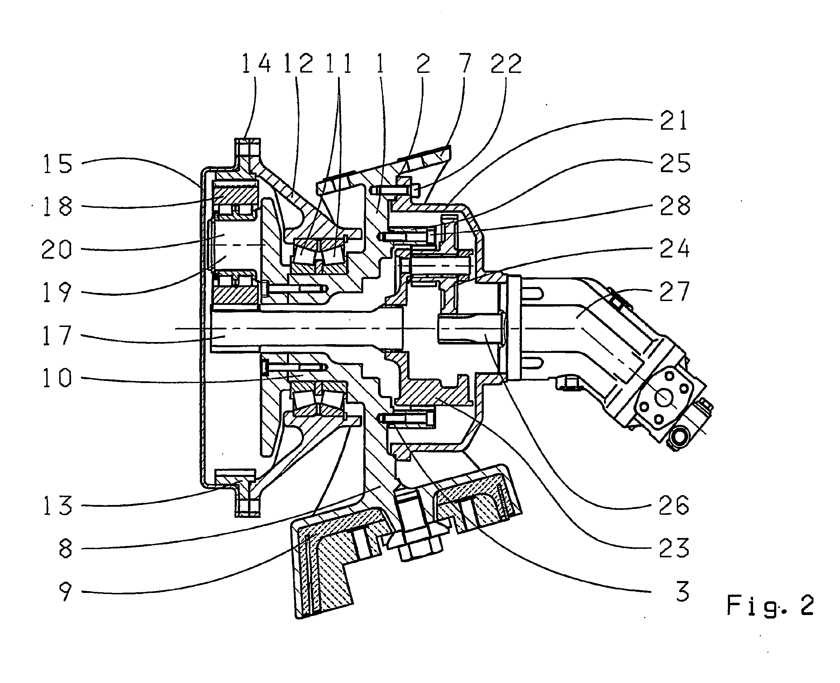

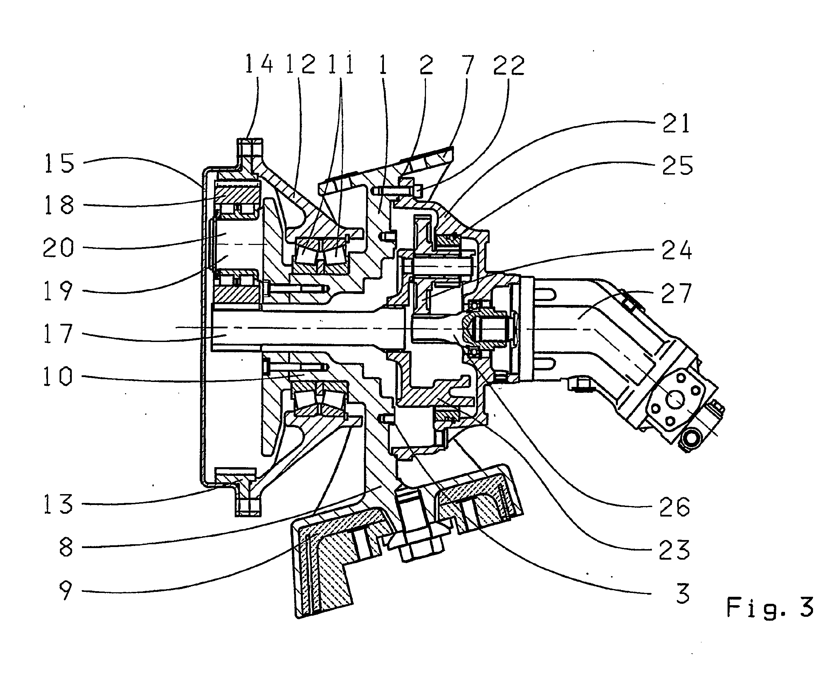

Die Ausbildung des Antriebs nach Fig. 3 unterscheidet sich von der Ausbildung des Antriebs nach Fig. 2 dadurch, dass das äußere Zentralrad 25 im Gehäuseteil 21 angeordnet ist, wodurch die zweite Anflanschfläche 3 frei bleibt. Das äußere Zentralrad 25 kann über eine selbstschneidende Verzahnung oder andere Verbindungselemente mit dem Gehäuseteil 21 verbunden sein, es besteht jedoch auch die Möglichkeit, das äußere Zentralrad 25 und das Gehäuseteil 21 einstückig auszubilden. Die Abtriebswelle des Hydraulikmotors und das innere Zentralrad 26 sind zweistückig ausgebildet.

### Fig. 4:

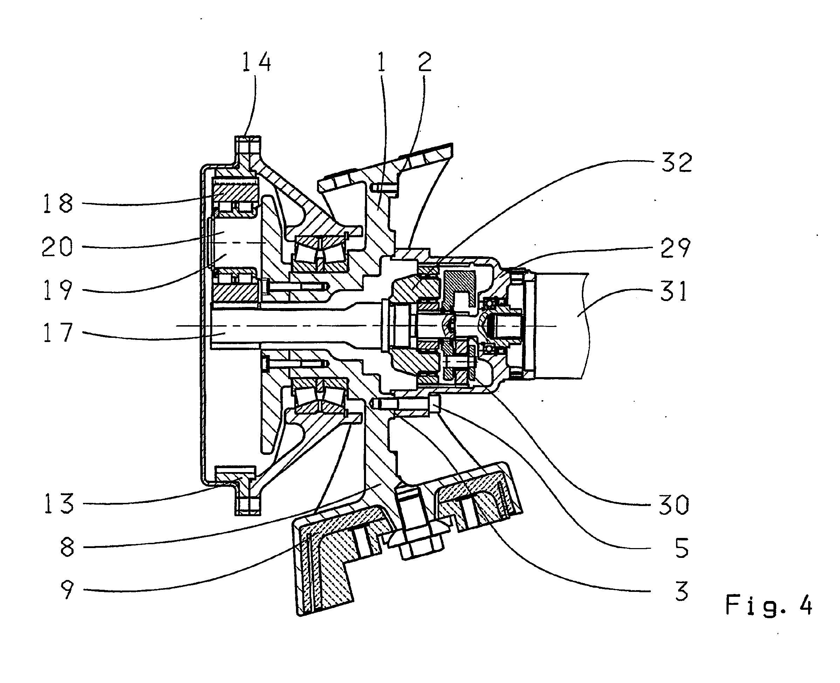

Der Antrieb nach Fig. 4 unterscheidet sich vom Antrieb nach Fig. 3 nur dadurch, dass im weiteren Gehäuseteil 29 eine erste Planetenstufe 30 von einem schnelllaufenden Hydraulikmotor 31 angetrieben wird und der Abtrieb der ersten Planetenstufe 30 eine zweite Planetenstufe 32 antreibt, deren Abtrieb das innere Zentralrad 17 antreibt. Die äußeren Zentralräder der ersten Planetenstufe 30 und der zweiten Planetenstufe 32 stützen sich im weiteren Gehäuseteil 29 ab. Das weitere Gehäuseteil 29 ist an der zweiten Anflanschfläche 3 befestigt.

### Bezugszeichen

- 1: Gehäuse
- 2: erste Anflanschfläche
- 3: zweite Anflanschfläche
- 4: äußere Kurvenscheibe
- 5: Verbindungselemente
- 6: Lager
- 7: Trägerplatte
- 8: Sockel
- 9: elastisches Element
- 10: Hals
- 11: Lager
- 12: Bauteil
- 13: äußeres Zentralrad
- 14: Abtriebsflansch
- 15: Abdeckung
- 16: Hydraulikmotor
- 17: inneres Zentralrad
- 18: Planeten
- 19: Planetenträger
- 20: Planetengetriebe
- 21: Gehäuseteil
- 22: Verbindungselemente
- 23: Planetenträger
- 24: Planeten
- 25: äußeres Zentralrad
- 26: inneres Zentralrad
- 27: Hydraulikmotor
- 28: Verbindungselemente
- 29: weiteres Gehäuseteil
- 30: erste Planetenstufe
- 31: schnelllaufender Hydromotor
- 32: zweite Planetenstufe

## Patentansprüche

1. Antrieb für eine Mischtrommel mit einem Antriebsmotor (16, 27, 31), welcher über ein Untersetzungsgetriebe (20) einen Abtriebsflansch (14) antreibt, wobei der Abtriebsflansch (14) mit einer Mischtrommel drehfest verbunden ist und mit einer Lagerung (11) in Verbindung steht, über welche die Mischtrommel drehbar gelagert ist, mit einem Gehäuse (1), welches mit einem Rahmenteil eines Mobilfahrzeugs in Verbindung steht, **dadurch gekennzeichnet, dass** das Gehäuse (1) mindestens zwei Anflanschflächen (2, 3) aufweist, wobei eine erste Anflanschfläche (2) zum Anflanschen mit einem weiteren zum Antrieb des Abtriebsflansches (14) vorgesehenen Untersetzungsgetriebe (24) ausbildbar ist, und die zweite Anflanschfläche (3) zum Anflanschen des Antriebsmotors (16, 31) ausbildbar ist, wobei beide Anflanschflächen (2, 3) auf der der Mischtrommel abgewandten Seite des Gehaüses angeordnet sind.

2. Antrieb für eine Mischtrommel nach Anspruch 1, **dadurch gekennzeichnet, dass** das Gehäuse (1) auf der der Mischtrommel zugewandten Seite einen Flansch (10) aufweist, welcher die Lagerung (11) trägt.

3. Antrieb für eine Mischtrommel nach Anspruch 1, **dadurch gekennzeichnet, dass** das Gehäuse (1) einen Sockel (8) aufweist, über welchen der Antrieb mit einem Lagerbock, welcher mit dem Rahmenteil verbunden ist, in Verbindung steht.

4. Antrieb für eine Mischtrommel nach Anspruch 3, **dadurch gekennzeichnet, dass** der Sockel (8) über ein elastisches Element (9) verbunden ist.

5. Antrieb für eine Mischtrommel nach Anspruch 1, **dadurch gekennzeichnet, dass** der Antriebsmotor (16) ein inneres Zentralrad (17) eines Planetengetriebes und ein äußeres Zentralrad (13) den Abtriebsflansch (14) antreiben.

6. Antrieb für eine Mischtrommel nach Anspruch 1, **dadurch gekennzeichnet, dass** ein erstes Planetengetriebe (24) von dem Antriebsmotor (27) angetrieben wird und ein zweites Planetengetriebe (20) antreibt, wobei die Lagerung (11) zwischen dem ersten und dem zweiten Planetengetriebe angeordnet ist.

7. Antrieb für eine Mischtrommel nach Anspruch 6, **dadurch gekennzeichnet, dass** das äußere Zentralrad (25) des ersten Planetengetriebes (24) an der zweiten Anflanschfläche (3) anliegt.

8. Antrieb für eine Mischtrommel nach Anspruch 1, **dadurch gekennzeichnet, dass** die Lagerung (11) zwischen einem Planetengetriebe (20) und einem Antriebsmotor (27) angeordnet ist.

9. Antrieb für eine Mischtrommel nach Anspruch 1, **dadurch gekennzeichnet, dass** die Lagerung (11) aus einer Wälzlagerung besteht, deren Innenringe ortsfest mit dem Gehäuse (1) verbunden sind.

## Claims

1. Drive for a mixing drum with a drive motor (16, 27, 31) which drives an output flange (14) via a reduction gear (20), with the output flange (14) being nonrotationally connected to a mixing drum, and linked to a bearing (11) through which the mixing drum is bearing-supported, and with a housing (1) which is connected to a frame section of a vehicle, **characterized in that** the housing (1) features at least two flange surfaces (2, 3), with a first flange surface (2) being applicable for flange-mounting with another reduction gear (24) to drive the output flange (14) and the second flange surface (3) being applicable for flange-mounting the drive motor (16, 31), with both flange surfaces (2, 3) being arranged on the side of the housing not facing the mixing drum.

2. Drive for a mixing drum according to claim 1, **characterized in that** on the side facing the mixing drum, the housing (1) features a flange (10) which supports the bearing (11).

3. Drive for a mixing drum according to claim 1, **characterized in that** the housing (1) features a base (8) through which the drive is linked to a bearing block which is linked to the frame section.

4. Drive for a mixing drum according to claim 3, **characterized in that** the base (8) is linked via an elastic element (9).

5. Drive for a mixing drum according to claim 1, **characterized in that** the drive motor (16) drives an inner center gear (17) of a planetary transmission while an outer center gear (13) drives the output flange (14).

6. Drive for a mixing drum according to claim 1, **characterized in that** the drive motor (27) drives a first planetary transmission (24) and a second planetary transmission (20), with the bearing (11) being arranged between the first and the second planetary transmission.

7. Drive for a mixing drum according to claim 6, **characterized in that** the outer center gear (25) of the first planetary transmission (24) abuts on the second flange surface (3).

8. Drive for a mixing drum according to claim 1, **characterized in that** the bearing (11) is arranged between a planetary transmission (20) and a drive motor (27).

9. Drive for a mixing drum according to claim 1, **characterized in that** the bearing (11) is an AFB whose inner rings are immovably linked to the housing (1).

## Revendications

1. Motopropulseur pour un tambour malaxeur avec un moteur d'entraînement (16, 27, 31), entraînant par l'intermédiaire d'un réducteur (20) une bride de sortie (14), sachant que la bride de sortie (14) est liée solidaire en rotation à un tambour malaxeur et qu'elle est liée à un support (11), à l'aide duquel le tambour malaxeur est monté à rotation, doté d'un carter (1), étant lié à une partie de la caisse d'un véhicule automobile, **caractérisé en ce que** le carter (1) comporte au moins deux surfaces de bridage (2, 3), sachant qu'une première surface de bridage (2) peut être réalisée de manière à pouvoir brider un autre réducteur (24) prévu pour l'entraînement de la bride de sortie (14), et que la deuxième surface de bridage (3) peut être réalisée de manière à pouvoir brider le moteur d'entraînement (16, 31), sachant que les deux surfaces de bridage (2, 3) sont disposées du côté du carter opposé au tambour malaxeur.

2. Motopropulseur pour un tambour malaxeur selon la revendication 1, **caractérisé en ce que** le carter (1) comporte du côté dirigé vers le tambour malaxeur une bride (10) sur laquelle est logé le support (11).

3. Motopropulseur pour un tambour malaxeur selon la revendication 1, **caractérisé en ce que** le carter (1) comporte un socle (8), par l'intermédiaire duquel le motopropulseur est lié à un support de palier, lequel est lié à une partie de la caisse.

4. Motopropulseur pour un tambour malaxeur selon la revendication 3, **caractérisé en ce que** la liaison du socle (8) au support de palier est réalisée par l'intermédiaire d'un élément élastique (9).

5. Motopropulseur pour un tambour malaxeur selon la revendication 1, **caractérisé en ce que** le moteur d'entraînement (16), un pignon central intérieur (17) d'un groupe épicycloïdal et un pignon central extérieur (13) entraînent la bride de sortie (14).

6. Motopropulseur pour un tambour malaxeur selon la revendication 1, **caractérisé en ce que** un premier groupe épicycloïdal (24) est entraîné par le moteur d'entraînement (27) et qu'il entraîne un deuxième groupe épicycloïdal (20), sachant que le support (11) est logé entre le premier et le deuxième groupe épicycloïdal.

7. Motopropulseur pour un tambour malaxeur selon la revendication 6, **caractérisé en ce que** le pignon central extérieur (25) du premier groupe épicycloïdal (24) est en butée contre la deuxième surface de bridage (3).

8. Motopropulseur pour un tambour malaxeur selon la revendication 1, **caractérisé en ce que** le support (11) est disposé entre un groupe épicycloïdal (20) et un moteur d'entraînement (27).

9. Motopropulseur pour un tambour malaxeur selon la revendication 1, **caractérisé en ce que** le support (11) est composé d'un palier à roulement dont les bagues intérieures son liées de manière fixe au carter (1).
